# EUROPEAN PATENT SPECIFICATION

(11) **EP 3 744 989 B1**
(45) Date of publication and mention of the grant of the patent: **04.10.2023**
(21) Application number: 19177053.6
(22) Date of filing: 28.05.2019
(51) Int. Cl.: F16B 7/20, F16B 21/04

(54) **MODULAR ROUTING BRACKET**
MODULARES VERBINDUNGSTEIL
SUPPORT D'ASSEMBLAGE MODULAIRE

(43) Date of publication of application: 02.12.2020
(73) Proprietor: Illinois Tool Works, Inc., Glenview, Illinois 60025 (US)
(72) Inventor: Khuu, Duc Hau, 33373 Bredaryd (SE); Savi, Massimo, 33373 Bredaryd (SE)
(74) Representative: HGF

(56) References cited:
- EP-A1- 0 221 375
- WO-A1-2008/074066
- WO-A1-2017/095224
- WO-A1-2017/126113
- DE-A1-102017 010 602
- GB-A- 1 011 688
- US-A1- 2006 280 553
- US-B1- 9 086 087

## Description

### A BRACKET ASSEMBLY

The present invention generally relates to the field of fasteners and brackets and in particular, to the field of support brackets for mounting one or more components to an external structure. More specifically, the present invention relates to an adaptable modular bracket assembly for securing and/or routing accessories, such as, for example, cables, tubing and other components, to a vehicle structure.

### Introduction

Fasteners and bracket assemblies are widely used for fixing and/or securing engine accessories, such as, for example, cables, tubing, piping or any other peripheral components, to various supports (i.e. chassis) of a vehicle (e.g. car, truck etc.). Often, the brackets are single-point brackets that are simply fixed to the chassis of the vehicle utilising common fasteners, such as, for example, bolts and nuts, that are provided through a bore of the bracket.

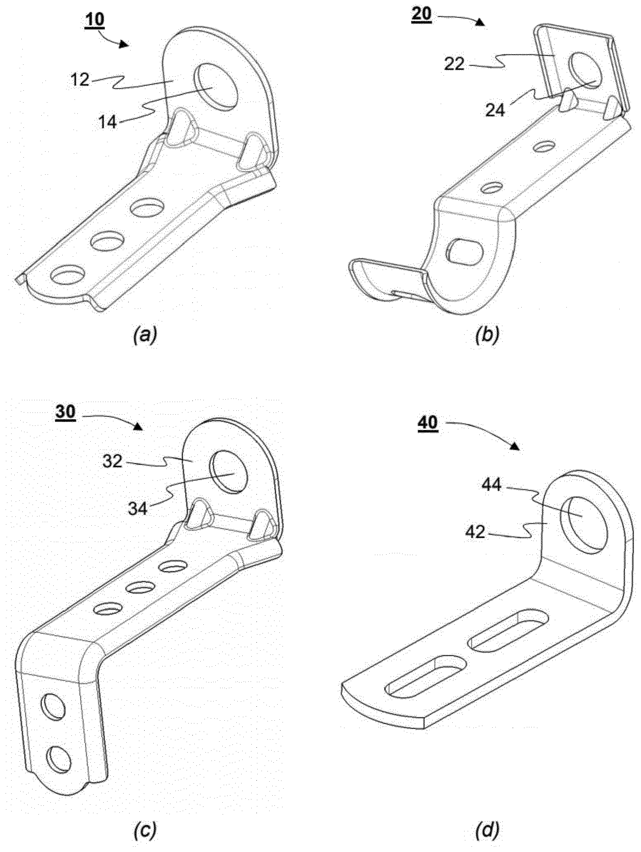

Figures 1 (a) to (d) shows illustrations of example embodiments of standard brackets 10, 20, 30, 40 used in vehicles. Typically, the brackets 10, 20, 30, 40 comprise perpendicularly arranged flange elements 12, 22, 32, 42 having a central bore 14, 24, 34, 44 through which a screw or bolt (not shown) is inserted for attachment to the vehicle structure (not shown). Often, such single-point brackets are not correctly positioned (or unintentionally rotated) while tightening (i.e. torqueing) the fastener (e.g. screw, bolt). Therefore, after installation, an incorrectly positioned (i.e. angular position about the central axis of the bore) bracket 10, 20, 30, 40 may need un-torqueing (i.e. loosening), re-positioning and re-torqueing (i.e. tightening) to move the bracket in the required angular position. In addition, standard brackets such as the brackets 10, 20, 30, 40 illustrated in Figures 1 (a) to (d) require the user to hold the bracket during installation, potentially causing injury to the user's hand while tightening the fastener (e.g. when using a powered wrench tool).

WO 2017/126113 A shows a further assembly of the prior art.

It is an object of the present invention to provide an improved bracket assembly that is more robust, easily detachable and re-attachable without risking damage to the bracket assembly or the user. Furthermore, it is an object of the present invention to provide a bracket assembly requiring minimised insertion force during assembly, but also providing a maximised holding force during use, therefore minimising the risk of detachment during use.

### Summary of the Invention

According to a first aspect of the present invention, there is provided a bracket assembly for securing paraphernalia of a vehicle, comprising:
a base member having a central axis, opposing first and second axial base surfaces and an outer circumferential base surface, demountably coupleable to a face of an external structure, such that said central axis is oriented normal to the face of the external structure during use;
a support member, comprising an annular coupling portion adapted to be coaxially movably coupled to said base member in any one of a plurality of predetermined fixed angular orientations about said central axis of said base member;
a locking member, configured to be coaxially and operably coupled with said support member and said base member, adapted to rotate relative to said support member about said central axis between a first angular orientation, allowing axial movement [along said central axis] of said locking member relative to said support member, a second angular orientation, allowing axial movement of coupled said locking member and said support member relative to said base member, and a third angular orientation, preventing axial movement of coupled said support member and said locking member relative to said base member, during use/when assembled.

This provides the advantage of a bracket that can be easily and repeatedly attached to, but also detached from the base member (i.e. bushing) mounted to the wall (e.g. chassis of a vehicle) without risking damage to the bracket or the user, therefore, allowing easy readjustment of the angular orientation of the support member (i.e. support bracket) if required. In addition, the present invention provides the advantage of modular components that are easily replaceable / exchangeable in the event of damage to any one of the components. In particular, the bracket assembly can be made from much more rigid material (e.g. rigid plastic) assuring a considerably stronger retention.

Advantageously, the base member may comprise a plurality of radially outwardly protruding circumferentially spaced apart angular guide members provided on said outer circumferential base surface. Preferably, said plurality of angular guide members may be arranged equidistantly. Even more preferably, said plurality of angular guide members may be arranged centrally on said outer circumferential base surface.

Advantageously, said base member my further comprise a central bore configured to receive a fastener.

Preferably, said base member may be a bushing.

Advantageously, said annular coupling portion may have a first inner circumferential coupling surface comprising a plurality of circumferentially spaced apart retainer members protruding radially and axially, each one configured to axially slidingly receive and contain one of said plurality of angular guide members. Preferably, said retainer members may be arranged so as to receive one and laterally abut an adjacent one of said plurality of retainer members during use.

Advantageously, said plurality of retainer members may define a second inner circumferential coupling surface having a diameter configured to provide a transition fit with said outer circumferential base surface of said base member during use. Preferably, said plurality of retainer members are hook-shaped.

Advantageously, said locking member may comprise an annular body, having an inner and outer circumferential locking surface and opposing first and second axial ends; a plurality of circumferentially spaced apart first locking teeth, protruding radially inwardly from said inner circumferential locking surface at said first axial end, and a plurality of circumferentially spaced apart second locking teeth, protruding axially from said second axial end and radially inward from said outer circumferential locking surface, and wherein said plurality of first locking teeth and said plurality of second locking teeth are arranged circumferentially offset to each other. Preferably, said outer circumferential locking surface may have a diameter configured to provide a transition fit with said first inner circumferential coupling surface of said annular coupling portion.

Advantageously, each one of said plurality of second locking teeth comprises at least one chamfered axial end surface, configured to operably engage with any one of said plurality of retainer members during assembly. In certain embodiments, each one of said plurality of second locking teeth comprises two chamfered axial end surfaces. Yet more specifically, the axial end surface comprises two chamfered surfaces separated by a substantially flat surfaces. In this way, the force required to move between unlocked and locked positions is the same in the clockwise and anticlockwise directions.

Advantageously, said locking member may further comprise a handle portion protruding radially outward from said outer circumferential locking surface.

Advantageously, the bracket assembly may further comprise an anti-rotation guide mechanism cooperatingly provided on said support member and said locking member, configured to align said locking member and said support member in a predetermined angular orientation relative to each other during assembly. Preferably, said anti-rotation guide mechanism may comprise at least one axially extending groove and corresponding at least one tongue, matingly provided on respective said first inner circumferential coupling surface and said outer circumferential locking surface.

### Brief Description of the Drawings

Example embodiments of the description will now be described, by way of example only, with reference to the accompanying drawings, in which:
**Figure 1 (a)**, (b), (c), (d) (Prior Art) are illustrations of different designs of standard brackets used to attach accessories to a vehicle chassis;
**Figure 2** shows a perspective view of an example embodiment of the bracket assembly of the present invention, when assembled and mounted to a wall structure (e.g. vehicle chassis);
**Figure 3** is a perspective view of the base member (i.e. bushing) of the bracket assembly shown in Figure 2;
**Figure 4** is a perspective view of the support member (i.e. support bracket) of the bracket assembly shown in Figure 2, (a) perspective front view, (b) perspective rear view;
**Figure 5** is a perspective view of the locking member (i.e. bezel) of the bracket assembly shown in Figure 2, (a) perspective front view, (b) perspective rear view;
**Figure 6** is an exploded perspective view of the bracket assembly during assembly, with the base member (i.e. bushing) attached to a wall structure;
**Figure 7** is a perspective view of operably coupled support member (i.e. support bracket) and locking member prior to attachment to the base member (i.e. bushing), (a) perspective rear view and (b) perspective front view, with the locking member being in the second angular orientation relative to the support member (i.e. support bracket);
**Figure 8** is (a) a front view of assembled bracket assembly, (b) a perspective rear view of the assembled bracket assembly with the locking member in the second angular orientation (i.e. unlocked) and (c) a perspective rear view of the assembled bracket assembly with the locking member in the third angular orientation (i.e. locked);
**Figure 9** is (a) a perspective view and (b) a front view of a plurality of bracket assemblies utilising different support bracket designs, mounted to a wall structure;
**Figure 10** is a perspective view of an alternative bracket assembly, not in the scope of the claims, mounted to a wall structure;
**Figure 11** is an illustration of the support bracket of the bracket assembly of Figure 10, (a) a perspective front view, (b) a front view, (c) a rear view with the locking levers in the locked position, and (d) a rear view with the locking levers in the unlocked position;
**Figure 12** is a perspective view of the support bracket mounted to the bushing (a) with the locking levers in the unlocked position, and (b) with the locking levers in the locked position.

### Detailed description of the preferred embodiment(s)

The described example embodiment relates to a bracket assembly suitable for securing paraphernalia and accessories (i.e. tubing, cables, pipes or other components of the vehicle or vehicle engine) to a vehicle chassis. The embodiment(s) of the invention can be applied in heavy-duty vehicles, such as trucks, buses or construction equipment, such as working machines. Although the invention is described with respect to a heavy-duty vehicle, such as a truck, the invention is not restricted to this particular vehicle type or vehicles altogether, but may also be used in other vehicle types, machines or structures requiring attachment of accessories or peripheral components to a wall structure. Certain terminology is used in the following description for convenience only and is not limiting. The words *'right', 'left'*, *'lower', 'upper', 'front', 'rear', 'upward', 'down'* and *'downward'* designate directions in the drawings to which reference is made and are with respect to the described component when assembled and mounted. The words *'inner', 'inwardly'* and *'outer', 'outwardly'* refer to directions toward and away from, respectively, a designated centreline or a geometric centre of an element being described (e.g. central axis), the particular meaning being readily apparent from the context of the description.

Further, as used herein, the terms *'connected', 'attached', 'coupled', 'mounted'* are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, *"first", "second", "third"* etc. merely indicate that different instances of like objects are being referred to and are not intended to imply that the objects so described must be in a given sequence, either temporally, spatially, in ranking or in any other manner.

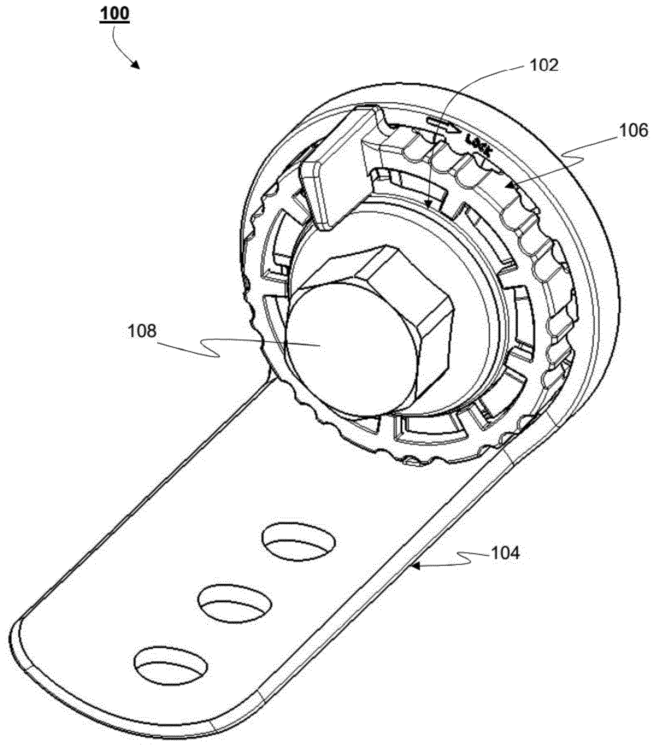

Referring now to Figure 2, an example embodiment of the bracket assembly 100 is shown in its assembled form when attached to a wall structure. The bracket assembly 100 includes three modular components that can be assembled so as to provide a secure, selectively adjustable and robust attachment for a wall structure, such as a vehicle chassis. The modular components include a base or bushing 102, a support bracket 104 and a locking ring or bezel 106. A fastener 108, such as a bolt and nut or screw, may be used to fix the bushing 102 to the wall structure.

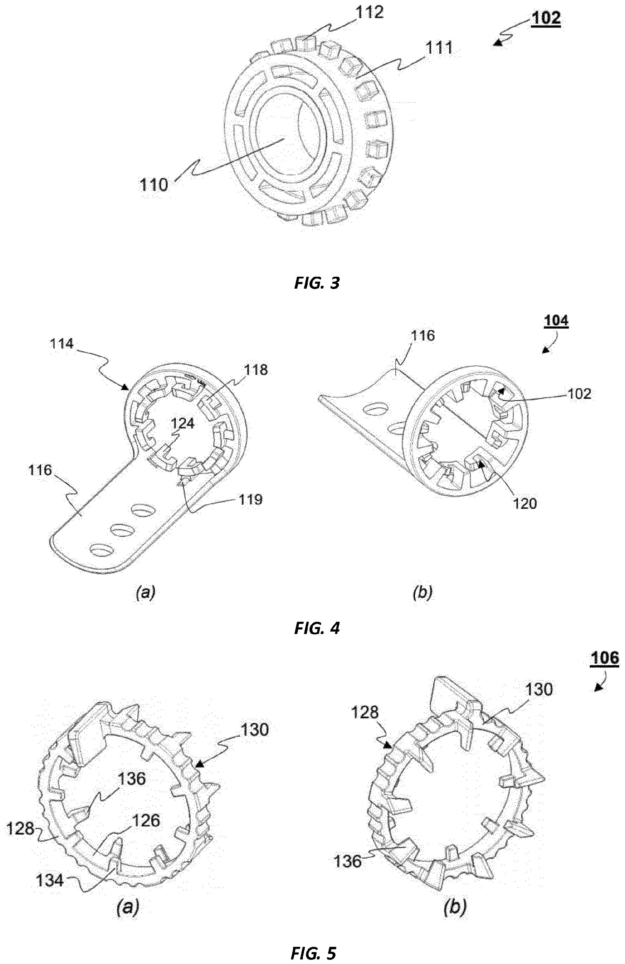

Referring now to Figure 3, the base or bushing 102 includes a cylindrical body having a bore 110 configured to receive a bolt or fastener 108 for attachment to the wall structure. The cylindrical outer surface 111 of the bushing 102 is provided with a number of rectangularly shaped protrusions 112 extending radially outward from the outer circumferential surface 111. The protrusions 112 are provided in single file on the centreline of the outer circumferential surface 111 so as to provide a symmetrical bushing 102 with respect to a centre plane perpendicular to the centre axis, i.e. the bushing 102 can be mounted to the wall in either orientation (front or back) without compromising its functionality. In this particular example embodiment, the protrusions 112 are of cuboid shape, but it is understood by the person skilled in the art that the protrusion 112 may be of any other shape, such as an oblong rib, suitable to matingly cooperate with the coupling portion of the support bracket 104. Furthermore, in this particular example, the bushing comprises eighteen protrusions 112 that are equidistantly arranged on the outer circumferential surface 111, however, it is understood that any other suitable number of protrusions 112 may be used.

Referring now to Figure 4, the support bracket 104 includes an annular coupling portion 114 perpendicular extending from a support portion 116 of the support bracket 104. It is understood that the support portion 116 may be of any suitable shape or design. Also, the coupling portion 114 may extend from the support portion 116 at any suitable orientation relative to the longitudinal axis of the support portion 116. The annular coupling portion 114 includes a number of hook shaped retainers 118 extending radially inward from a first inner circumferential surface 122 of the annular coupling portion 114 and axially towards the support portion 116, so that a dent portion 120 of each hook shaped retainer 118 faces in the direction of the protrusions 112 during assembly. The retainers 118 are circumferentially spaced apart on the first inner circumferential surface 122 so as to define a second inner circumferential surface 124 having a diameter that is suitable to slidingly fit onto the outer circumferential surface 111 of the bushing 102. The diameter of the first inner circumferential surface 111 is suitable to operably receive the bushing 102 and protrusions 112. The retainers 118 are equidistantly spaced about the inner circumferential surface 122 is such that two adjacent protrusions 118 operably align with the retainer 120 (i.e. one protrusion 112 aligns with the dent portion 120 and the adjacent protrusion 112 aligns with the gap between two adjacent retainers 118). In this particular example embodiment, the annular coupling portion 114 comprises nine retainers 118 adapted to operably receive the eighteen protrusions 112 of the bushing 102. An anti-rotation stopper 119 may be provided on the support portion 116 configured to operably engage with a respective guide slot provided on the locking ring 106.

Referring now to Figure 5, the annular locking ring or bezel 106 has an inner circumferential surface 126, opposing first and second axial surfaces 128 and 130 and an outer circumferential surface 132. A first set of circumferentially equidistantly arranged teeth 134 is protruding radially inward from the inner circumferential surface 126 at the first axial surface end 128 (i.e. the end facing away from the coupling portion 114 during assembly) and a second set of circumferentially equidistantly arranged teeth 136 is protruding axially from the second axial surface 130 and radially inward at the teeth's end. First set of teeth 134 are angularly offset from the second set of teeth 136. Each set of teeth 134, 136 are circumferentially equidistantly spaced so as to align with the gaps between the retainers 118. In addition, the second set of teeth 138 may comprise a front surface that is chamfered towards the coupling portion 114 and protrusions 112 of the bushing 102 during assembly. Furthermore, the outer circumferential surface 132 may be provided with corrugations, one or more slots or axial grooves, so as to optimise gripping properties when handling the locking ring during assembly, but also to provide an alignment guide that is adapted to matingly engage with the anti-rotational stopper 119 of the support bracket 104 so as to avoid accidental rotation during assembly. In the depicted embodiment, the corrugations are all the same thus the locking and unlocking force required to overcome the anti-rotational stopper 119 is the same irrespective of the position of the bezel 106. In this way, if the operator finds the unlocking handle difficult to reach when it is positioned, s/he can easily change the angular alignment it in order to reach it better.

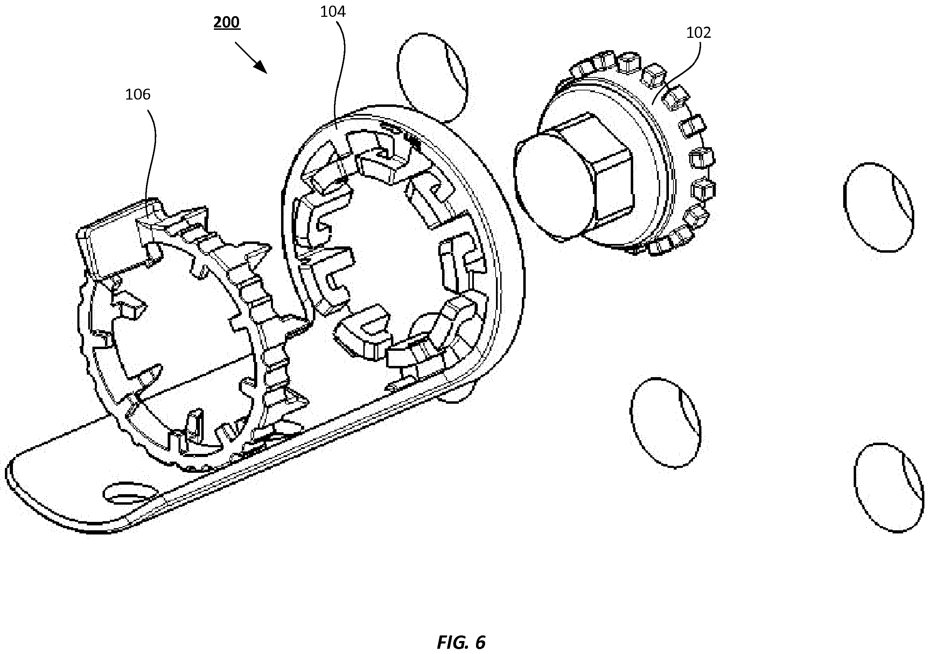

Figure 6 shows an exploded view of the three modular components, i.e. bushing 102, support bracket 104 and locking ring 106 before assembly with the bushing 102 mounted to a wall structure 200.

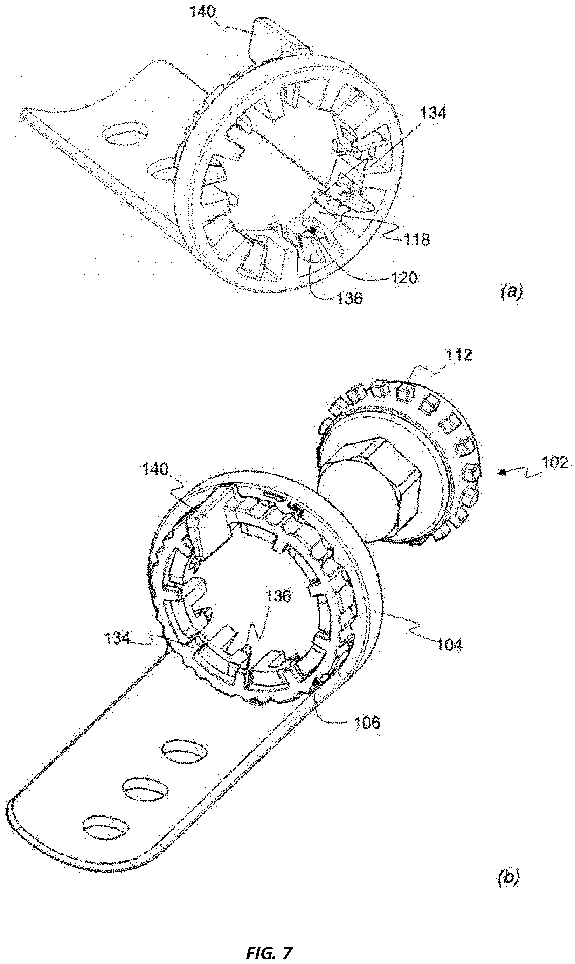

During assembly, as shown in Figures 7 (a) and (b), a bushing 102 is mounted to a wall structure with a fastener 108 (e.g. bolt). The second set of teeth 136 of the locking ring 106 is then brought into alignment with the gaps between the retainers 118 and pushed through until the first set of teeth 134 abuts with the rear end of the retainers 118. Once in position, the locking ring 106 is rotated clockwise, using a handle portion 140, until the first set of teeth 134 is brought into alignment with the retainer 118 gaps, also moving the second set of teeth 136 adjacent to the dent portion 120 of the retainers 118. In order to avoid accidental rotation or misalignment, the anti-rotational stopper 119 may be used with a predetermined corrugation, slot or groove provided on the locking ring 106.

The coupled support bracket 104 and locking ring 106 are now "primed" and can be slidingly mounted onto the bushing 102, wherein two adjacent protrusion 112 are received by the dent portion 120 and the gap, respectively.

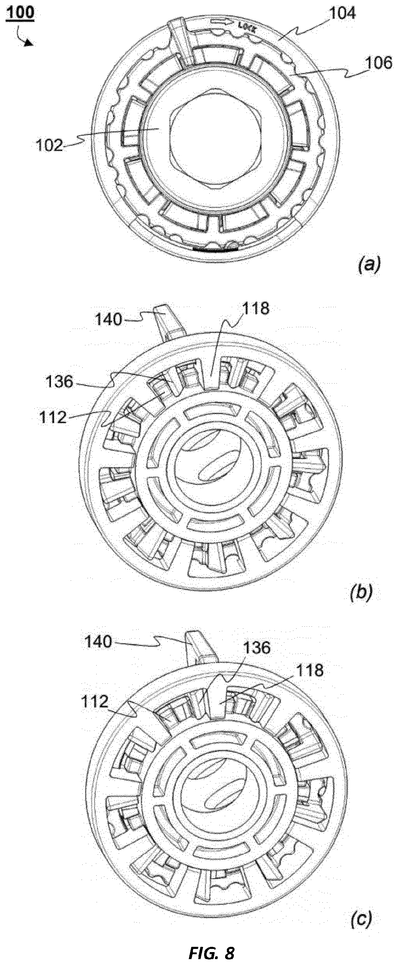

Referring now to Figures 8 (a), (b) and (c), the support bracket 104 is "locked" onto the bushing 102 by rotating the locking ring 106 or bezel anticlockwise until the second set of teeth 136 abuts against a radial (side) wall of the retainers 118 blocking the dent portion 120 containing the protrusion 112. In the "locked" position, the support bracket 104 is axially, as well as, rotationally immovable with respect to the bushing 102, thus, providing a strong retention and precise angular alignment. In this particular example embodiment, i.e. with eighteen protrusions 112, nine retainers 118 and nine teeth for the first and second set of teeth 134, 136, the required angle of rotation is about 10°. Alternatively, the support bracket 104 is "locked" onto the bushing 102 by rotating the locking ring 106 or bezel clockwise until the second set of teeth 136 abuts against a radial (side) wall of the retainers 118 blocking the dent portion 120 containing the protrusion 112.

In the event that the support bracket 104 has to be removed from the bushing 102, e.g. to correct the angular alignment or replace the support bracket 104 with a different design, the locking ring 106 is simply moved clockwise (e.g. 10° for this particular example) "unlocking" the coupling between the support bracket 104 and the bushing 102. Once "unlocked", the coupled support bracket 104 and locking ring 106 can be slidingly (axially) moved off the bushing 102, re-orientated or replaced, and slidingly moved back onto the bushing 102 before the locking ring 106 is rotated back anticlockwise to "lock" the coupling between the support bracket 104 and the bushing 102. The assemble/disassemble, mount/demount process can be repeated without the risk of damaging the bracket assembly 100 or injuring the user.

Furthermore, it is understood by the skilled person in the art that when using a different number of protrusions 112, retainers 118 and teeth 134, 136, the required angle of rotation will vary, but is still within the scope of this invention.

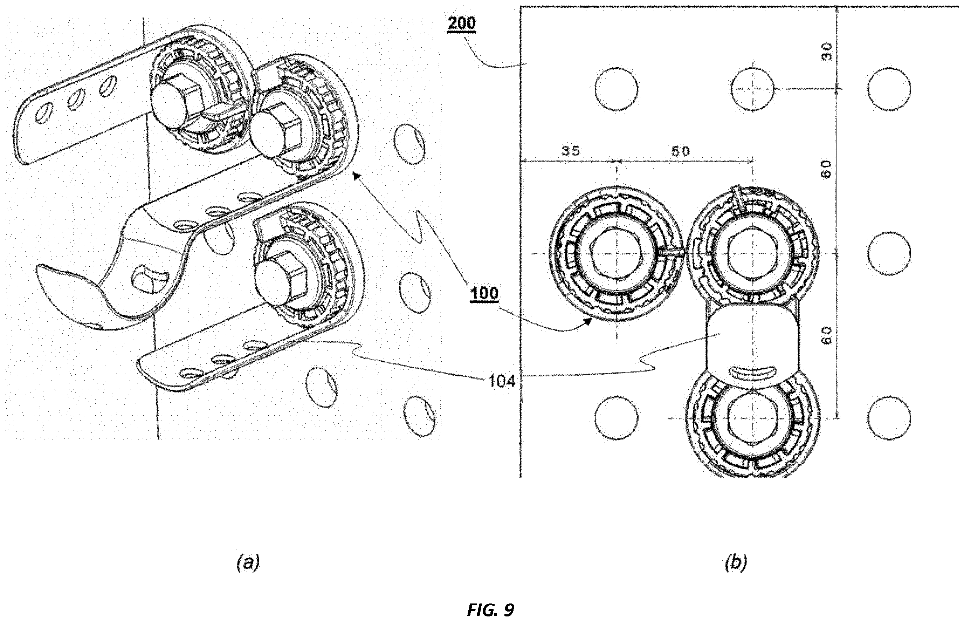

Figures 9 (a) and (b) shows a number of tightly spaced bracket assemblies 100 with various designs of the bracket support 104 mounted to a wall structure 200 emphasising the minimal space required to assemble and mount the bracket assembly 100 of the present invention. In particular, the locking ring 106 or bezel can be positioned around the perimeter of the coupling portion 114 in the most suitable (or convenient) position for the user. Also, the bracket assemblies 100 do not interfere with each other (e.g. interfering handle portions 140) when mounted on the bolt spacer joint.

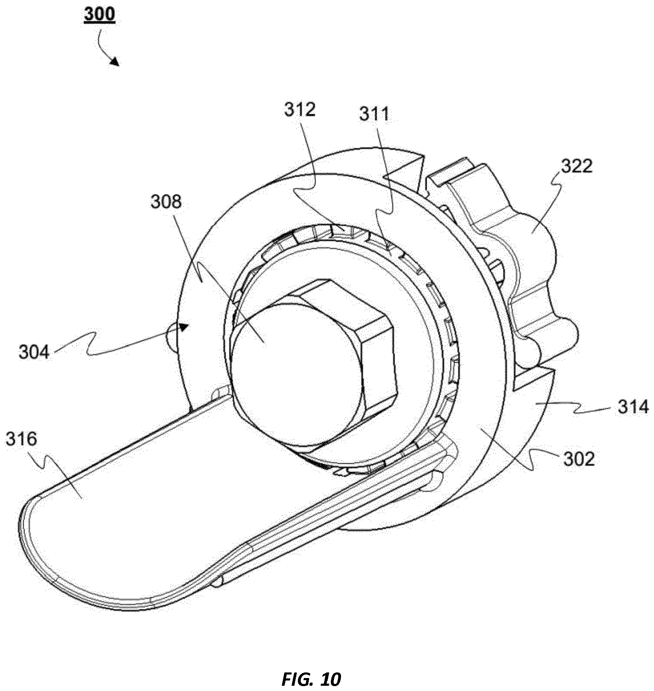

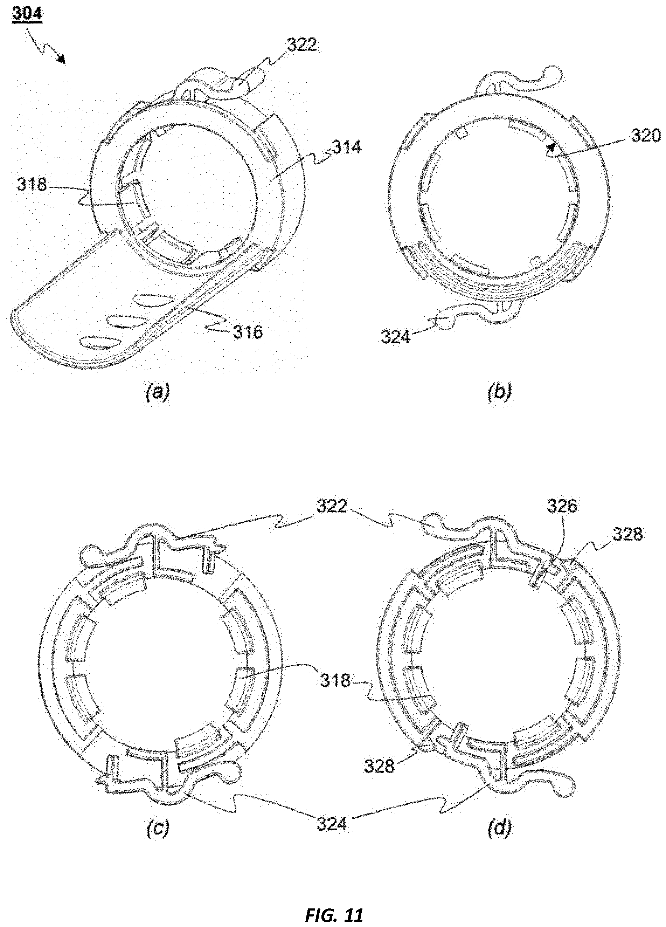

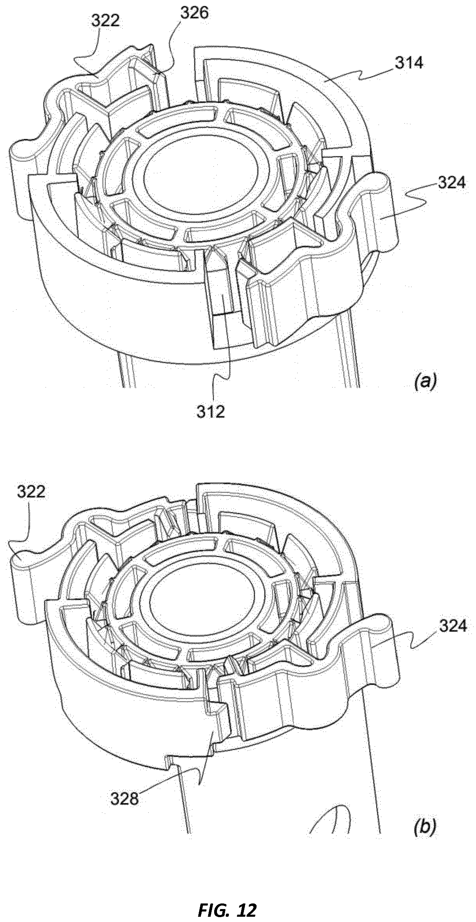

Referring now to Figures 10, 11 and 12, an alternative bracket assembly 300 includes a bushing or base 302 and a support bracket 304, operably coupleable and removably mountable to a wall structure.

The bushing 302 includes a cylindrical body having a bore 306 configured to receive a bolt or fastener 308 for attachment to a wall structure. The cylindrical outer surface 311 of the bushing 302 is provided with a number of oblong protrusions 312 or ribs extending radially outward from the outer circumferential surface 311. In this particular example, the bushing comprises eighteen protrusions 312 that are equidistantly arranged on the outer circumferential surface 311, however, it is understood that any other suitable number of protrusions 312 may be used.

The support bracket 304 includes an annular coupling portion 314 perpendicular extending from a support portion 316 of the support bracket 304. It is understood that the support portion 316 may be of any suitable shape or design. Also, the coupling portion 314 may extend from the support portion 316 at any suitable orientation relative to the longitudinal axis of the support portion 316. The annular coupling portion 314 includes a number of clipping hooks 318 circumferentially spaced apart on an inner circumferential surface 320 of the coupling portion 314. The clipping hooks 318 are suitably flexible to allow radial movement during assembly.

First and second hinged lever 322, 324 are provided in opposing circumferential gaps between the clipping hooks 318 on the inner circumferential surface 320 of the coupling portion 314. Each one of the first and second lever 322, 324 comprises a tongue 326 configured move to and fit in between the gaps provided by adjacent spaced apart protrusions 312 of the bushing 302. Furthermore, the first and second levers 322, 324 are connected to the coupling portion 314 via a bending hinge, allowing levers 322, 324 to move between an "unlocked" position, with the tongue 326 moved away from the gap between adjacent protrusions 312, and a "locked" position, with the tongue 326 moved into the gap between adjacent protrusions 312. Furthermore, first and second levers 322, 324 are adapted to be retained in the "locked" and "unlocked" position by a lip 328.

During assembly, the coupling portion 314 is slidingly moved onto the bushing 302 until the clipping hooks 318 fixingly engage with the protrusions 312. In this position the support bracket 304 is axially immovable but rotationally movable with respect to the bushing 302. The bracket assembly 300 is rotationally "locked" by pushing first and second lever 322, 324 into the gap between the protrusions 312, and the first and second levers 322, 324 are retained in this position by the lip 328. In the event the angular orientation of the support bracket 304 has to be adjusted, the user simply "unlocks" the bracket assembly 300 by moving first and second lever 322, 324 into the "unlocked" position overcoming the lip 328 with a suitable force. The support bracket 304 is then be rotated into the desired angular orientation and first and second levers 322, 324 are moved back into the "locked" position.

The alternative bracket assembly 300 provides the advantage of easy rotational adjustment even after it is mounted to the bushing 302.

It will be appreciated by persons skilled in the art that the above embodiment(s) have been described by way of example only and not in any limitative sense, and that various alterations and modifications are possible without departing from the scope of the invention as defined by the appended claims. In particular, the number of protrusions 112, and corresponding retainers 118 and locking teeth 134, 136, as well as, the particular shape of the protrusions 112 and retainers 118 may vary. Also, any suitable material may be used for any one of the bushing 102, support bracket 104 and locking ring 106, such as, for example, metal, plastic or any suitable composite material. Dimensional tolerances between coupled components such as locking ring 106, support bracket 104 and bushing 102 may be suitable for a transition fit.

## Claims

1. A bracket assembly (100) for securing paraphernalia of a vehicle, comprising:
a base member (102) having a central axis, opposing first and second axial base surfaces and an outer circumferential base surface (111), demountably coupleable to a face of an external structure such that said central axis is oriented normal to the face of the external structure during use;
a support member (104), comprising an annular coupling portion (114) adapted to be coaxially movably coupled to said base member (102) in any one of a plurality of predetermined fixed angular orientations about said central axis of said base member (102); **characterized by**
a locking member (106), configured to be coaxially and operably coupled with said support member (104) and said base member (102), adapted to rotate relative to said support member (104) about said central axis between a first angular orientation, allowing axial movement of said locking member (106) relative to said support member (104), a second angular orientation, allowing axial movement of coupled said locking member (106) and said support member (104) relative to said base member (102), and a third angular orientation, preventing axial movement of coupled said support member (104) and said locking member (106) relative to said base member (102), during use/when assembled.

2. A bracket assembly according to claim 1, wherein said base member (102) comprises a plurality of radially outwardly protruding circumferentially spaced apart angular guide members (112) provided on said outer circumferential base surface (111).

3. A bracket assembly according to claim 2, wherein said plurality of angular guide members (112) are arranged equidistantly.

4. A bracket assembly according to any one of claims 2 and 3, wherein said plurality of angular guide members (112) are arranged centrally on said outer circumferential base surface (111).

5. A bracket assembly according to any one of the preceding claims, wherein said base member (102) further comprises a central bore (110) configured to receive a fastener (108).

6. A bracket assembly according to any one of the preceding claims, wherein said base member (102) is a bushing.

7. A bracket assembly according to any one of the preceding claims, wherein said annular coupling portion (114) has a first inner circumferential coupling surface (122) comprising a plurality of circumferentially spaced apart retainer members (118) protruding radially and axially, each one configured to axially slidingly receive and contain one of said plurality of angular guide members (112).

8. A bracket assembly according to claim 7, wherein said retainer members (118) are arranged so as to receive one and laterally abut an adjacent one of said plurality of angular guide members (112) during use.

9. A bracket assembly according to any one of claims 7 and 8, wherein said plurality of retainer members (118) define a second inner circumferential coupling surface (124) having a diameter configured to provide a transition fit with said outer circumferential base surface (111) of said base member (102) during use.

10. A bracket assembly according to any one of claims 7 to 9, wherein said plurality of retainer members (118) are hook-shaped.

11. A bracket assembly according to any one of the preceding claims, wherein said locking member (106) comprises:
an annular body, having an inner and outer circumferential locking surface (126, 132) and opposing first and second axial ends (128, 130);
a plurality of circumferentially spaced apart first locking teeth (134), protruding radially inwardly from said inner circumferential locking surface (126) at said first axial end (128);
a plurality of circumferentially spaced apart second locking teeth (136), protruding axially from said second axial (130) end and radially inward from said outer circumferential locking surface (132), and
wherein said plurality of first locking teeth (134) and said plurality of second locking teeth (136) are arranged circumferentially offset to each other.

12. A bracket assembly according to claim 11, wherein said outer circumferential locking surface (132) has a diameter configured to provide a transition fit with said first inner circumferential coupling surface (122) of said annular coupling portion (114).

13. A bracket assembly according to any one of claims 11 and 12, wherein each one of said plurality of second locking teeth (136) comprises at least one chamfered axial end surface, configured to operably engage with any one of said plurality of retainer members (118) during assembly.

14. A bracket assembly according to any one of claims 11 1o 13, wherein said locking member (106) further comprises a handle portion (140) protruding radially outward from said outer circumferential locking surface (132).

15. A bracket assembly according to any one of said preceding claims, further comprising an anti-rotation guide mechanism (119) cooperatingly provided on said support member (104) and said locking member (106), configured to align said locking member (106) and said support member (104) in a predetermined angular orientation relative to each other during assembly.

16. A bracket assembly according to claim 15 when depending on claim 11, wherein said anti-rotation guide mechanism (119) comprises at least one axially extending groove and corresponding at least one tongue, matingly provided on respective said first inner circumferential coupling surface (122) and said outer circumferential locking surface (132).

## Patentansprüche

1. Halterungsanordnung (100) zum Sichern von Zubehör eines Fahrzeugs, aufweisend:
ein Basiselement (102) mit einer Mittelachse, entgegengesetzten ersten und zweiten axialen Basisflächen und einer äußeren umlaufenden Basisfläche (111), das derart abnehmbar mit einer Fläche einer externen Struktur koppelbar ist, dass die Mittelachse während der Verwendung normal zu der Fläche der externen Struktur ausgerichtet ist;
ein Stützelement (104), das einen ringförmigen Kopplungsabschnitt (114) aufweist, der dafür ausgelegt ist, in einer beliebigen von einer Vielzahl von vorbestimmten festen Winkelausrichtungen um die Mittelachse des Basiselements (102) koaxial beweglich mit dem Basiselement (102) gekoppelt zu werden; **gekennzeichnet durch**
ein Verriegelungselement (106), das konfiguriert ist, koaxial und funktionsfähig mit dem Stützelement (104) und dem Basiselement (102) gekoppelt zu werden, und das dafür ausgelegt ist, während der Verwendung / wenn es zusammengebaut ist, sich in Bezug auf das Stützelement (104) um die Mittelachse zu drehen zwischen einer ersten Winkelausrichtung, die eine axiale Bewegung des Verriegelungselements (106) in Bezug auf das Stützelement (104) ermöglicht, einer zweiten Winkelausrichtung, die eine axiale Bewegung des gekoppelten Verriegelungselements (106) und des Stützelements (104) in Bezug auf das Basiselement (102) ermöglicht, und einer dritten Winkelausrichtung, die eine axiale Bewegung des gekoppelten Stützelements (104) und des Verriegelungselements (106) in Bezug auf das Basiselement (102) verhindert.

2. Halterungsanordnung nach Anspruch 1, wobei das Basiselement (102) eine Vielzahl von radial nach außen vorstehenden, in Umfangsrichtung beabstandeten Winkelführungselementen (112) aufweist, die an der äußeren umlaufenden Basisfläche (111) vorgesehen sind.

3. Halterungsanordnung nach Anspruch 2, wobei die Vielzahl von Winkelführungselementen (112) äquidistant angeordnet sind.

4. Halterungsanordnung nach einem der Ansprüche 2 und 3, wobei die Vielzahl von Winkelführungselementen (112) mittig auf der äußeren umlaufenden Basisfläche (111) angeordnet sind.

5. Halterungsanordnung nach einem der vorhergehenden Ansprüche, wobei das Basiselement (102) ferner eine zentrale Bohrung (110) aufweist, die zur Aufnahme eines Befestigungselements (108) konfiguriert ist.

6. Halterungsanordnung nach einem der vorhergehenden Ansprüche, wobei das Basiselement (102) eine Buchse ist.

7. Halterungsanordnung nach einem der vorhergehenden Ansprüche, wobei der ringförmige Kopplungsabschnitt (114) eine erste innere umlaufende Kopplungsfläche (122) aufweist, die eine Vielzahl von in Umfangsrichtung beabstandeten Halteelementen (118), die radial und axial vorstehen, aufweist, von denen jedes so konfiguriert ist, dass es eines der Vielzahl von Winkelführungselementen (112) axial gleitend aufnimmt und fasst.

8. Halterungsanordnung nach Anspruch 7, wobei die Halteelemente (118) so angeordnet sind, dass sie während der Verwendung eines von der Vielzahl von Winkelführungselementen (112) aufnehmen und an einem benachbarten davon seitlich anliegen.

9. Halterungsanordnung nach einem der Ansprüche 7 und 8, wobei die Vielzahl von Halteelementen (118) eine zweite innere umlaufende Kopplungsfläche (124) definieren, die einen Durchmesser aufweist, der so konfiguriert ist, dass er während der Verwendung eine Übergangspassung mit der äußeren umlaufenden Basisfläche (111) des Basiselements (102) vorsieht.

10. Halterungsanordnung nach einem der Ansprüche 7 bis 9, wobei die Vielzahl von Halteelementen (118) hakenförmig ist.

11. Halterungsanordnung nach einem der vorhergehenden Ansprüche, wobei das Verriegelungselement (106) aufweist:
einen ringförmigen Körper, der eine innere und eine äußere umlaufende Verriegelungsfläche (126, 132) und entgegengesetzte erste und zweite axiale Enden (128, 130) aufweist;
eine Vielzahl von in Umfangsrichtung beabstandeten ersten Verriegelungszähnen (134), die von der inneren umlaufenden Verriegelungsfläche (126) an dem ersten axialen Ende (128) radial nach innen vorstehen;
eine Vielzahl von in Umfangsrichtung beabstandeten zweiten Verriegelungszähnen (136), die von dem zweiten axialen Ende (130) axial und von der äußeren umlaufenden Verriegelungsfläche (132) radial nach innen vorstehen, und
wobei die Vielzahl von ersten Verriegelungszähnen (134) und die Vielzahl von zweiten Verriegelungszähnen (136) in Umfangsrichtung zueinander versetzt angeordnet sind.

12. Halterungsanordnung nach Anspruch 11, wobei die äußere umlaufende Verriegelungsfläche (132) einen Durchmesser aufweist, der so konfiguriert ist, dass er eine Übergangspassung mit der ersten inneren umlaufenden Kopplungsfläche (122) des ringförmigen Kopplungsabschnitts (114) vorsieht.

13. Halterungsanordnung nach einem der Ansprüche 11 und 12, wobei jeder der Vielzahl von zweiten Verriegelungszähnen (136) zumindest eine abgeschrägte axiale Endfläche aufweist, die so konfiguriert ist, dass sie während des Zusammenbaus mit einem der Vielzahl von Halteelementen (118) in Wirkverbindung kommt.

14. Halterungsanordnung nach einem der Ansprüche 11 bis 13, wobei das Verriegelungselement (106) ferner einen Griffabschnitt (140) aufweist, der von der äußeren umlaufenden Verriegelungsfläche (132) radial nach außen vorsteht.

15. Halterungsanordnung nach einem der vorhergehenden Ansprüche, die ferner einen Drehschutz-Führungsmechanismus (119), der zusammenwirkend an dem Stützelement (104) und dem Verriegelungselement (106) vorgesehen ist, aufweist, der so konfiguriert ist, dass er das Verriegelungselement (106) und das Stützelement (104) während des Zusammenbaus in einer vorbestimmten Winkelausrichtung relativ zueinander ausrichtet.

16. Halterungsanordnung nach Anspruch 15, wenn abhängig von Anspruch 11, wobei der Drehschutz-Führungsmechanismus (119) zumindest eine sich axial erstreckende Nut und zumindest eine entsprechende Feder aufweist, die zusammenpassend auf der jeweiligen ersten inneren umlaufenden Kopplungsfläche (122) und der äußeren umlaufenden Verriegelungsfläche (132) vorgesehen sind.

## Revendications

1. Assemblage de support (100) pour la fixation d'accessoires d'un véhicule, comprenant :
un élément de base (102) ayant un axe central, des première et deuxième surfaces de base axiales opposées et une surface de base circonférentielle externe (111), pouvant être couplée de manière démontable à une face d'une structure externe de sorte que ledit axe central est orienté perpendiculairement à la face de la structure externe durant l'utilisation ;
un élément de support (104), comprenant une partie de couplage annulaire (114) adaptée pour être couplée de manière mobile coaxialement audit élément de base (102) dans l'une quelconque parmi une pluralité d'orientations angulaires fixes prédéterminées autour dudit axe central dudit élément de base (102) ; **caractérisé par**
un élément de verrouillage (106), configuré pour être couplé de manière coaxiale et opérationnelle avec ledit élément de support (104) et ledit élément de base (102), adapté pour tourner par rapport audit élément de support (104) autour dudit axe central entre une première orientation angulaire, permettant un mouvement axial dudit élément de verrouillage (106) par rapport audit élément de support (104), une deuxième orientation angulaire, permettant un mouvement axial dudit élément de verrouillage couplé (106) et dudit élément de support (104) par rapport audit élément de base (102), et une troisième orientation angulaire, empêchant un mouvement axial dudit élément de support couplé (104) et dudit élément de verrouillage (106) par rapport audit élément de base (102), durant l'utilisation/lorsqu'il est assemblé.

2. Assemblage de support selon la revendication 1, dans lequel ledit élément de base (102) comprend une pluralité d'éléments de guidage angulaires espacés circonférentiellement faisant saillie radialement vers l'extérieur (112) fournis sur ladite surface de base circonférentielle externe (111).

3. Assemblage de support selon la revendication 2, dans lequel ladite pluralité d'éléments de guidage angulaire (112) sont agencés de manière équidistante.

4. Assemblage de support selon l'une quelconque des revendications 2 et 3, dans lequel ladite pluralité d'éléments de guidage angulaires (112) sont agencés de manière centrale sur ladite surface de base circonférentielle externe (111).

5. Assemblage de support selon l'une quelconque des revendications précédentes, dans lequel ledit élément de base (102) comprend en outre un alésage central (110) configuré pour recevoir un élément de fixation (108).

6. Assemblage de support selon l'une quelconque des revendications précédentes, dans lequel ledit élément de base (102) est un raccord.

7. Assemblage de support selon l'une quelconque des revendications précédentes, dans lequel ladite partie de couplage annulaire (114) a une première surface de couplage circonférentielle interne (122) comprenant une pluralité d'éléments de retenue espacés circonférentiellement (118) faisant saillie radialement et axialement, chacun étant configuré pour recevoir et contenir de manière coulissante axialement l'un parmi ladite pluralité d'éléments de guidage angulaires (112).

8. Assemblage de support selon la revendication 7, dans lequel lesdits éléments de retenue (118) sont agencés de manière à recevoir un élément de guidage angulaire (112) adjacent et à venir en butée latéralement contre celui-ci durant l'utilisation.

9. Assemblage de support selon l'une quelconque des revendications 7 et 8, dans lequel ladite pluralité d'éléments de retenue (118) définit une deuxième surface de couplage circonférentielle interne (124) ayant un diamètre configuré pour fournir un ajustement de transition avec ladite surface de base circonférentielle externe (111) dudit élément de base (102) durant l'utilisation.

10. Assemblage de support selon l'une quelconque des revendications 7 à 9, dans lequel ladite pluralité d'éléments de retenue (118) sont en forme de crochet.

11. Assemblage de support selon l'une quelconque des revendications précédentes, dans lequel ledit élément de verrouillage (106) comprend :
un corps annulaire, ayant une surface de verrouillage circonférentielle interne et externe (126, 132) et des première et deuxième extrémités axiales opposées (128, 130) ;
une pluralité de premières dents de verrouillage espacées circonférentiellement (134), faisant saillie radialement vers l'intérieur à partir de ladite surface de verrouillage circonférentielle interne (126) sur ladite première extrémité axiale (128) ;
une pluralité de deuxièmes dents de verrouillage espacées circonférentiellement (136), faisant saillie axialement à partir de ladite deuxième extrémité axiale (130) et radialement vers l'intérieur à partir de ladite surface de verrouillage circonférentielle externe (132), et
dans lequel ladite pluralité de premières dents de verrouillage (134) et ladite pluralité de deuxièmes dents de verrouillage (136) sont agencées de manière décalée circonférentiellement les unes par rapport aux autres.

12. Assemblage de support selon la revendication 11, dans lequel ladite surface de verrouillage circonférentielle externe (132) a un diamètre configuré pour fournir un ajustement de transition avec ladite première surface de couplage circonférentielle interne (122) de ladite partie de couplage annulaire (114).

13. Assemblage de support selon l'une quelconque des revendications 11 et 12, dans lequel chacune parmi ladite pluralité de deuxièmes dents de verrouillage (136) comprend au moins une surface d'extrémité axiale chanfreinée, configurée pour s'engager de manière opérationnelle avec l'un quelconque parmi ladite pluralité d'éléments de retenue (118) durant l'assemblage.

14. Assemblage de support selon l'une quelconque des revendications 11 1 ou 13, dans lequel ledit élément de verrouillage (106) comprend en outre une partie de poignée (140) faisant saillie radialement vers l'extérieur à partir de ladite surface de verrouillage circonférentielle externe (132) .

15. Assemblage de support selon l'une quelconque des revendications précédentes, comprenant en outre un mécanisme de guidage anti-rotation (119) fourni de manière coopérante sur ledit élément de support (104) et ledit élément de verrouillage (106), configuré pour aligner ledit élément de verrouillage (106) et ledit élément de support (104) dans une orientation angulaire prédéterminée l'un par rapport à l'autre durant l'assemblage.

16. Assemblage de support selon la revendication 15, lorsqu'elle dépend de la revendication 11, dans lequel ledit mécanisme de guidage anti-rotation (119) comprend au moins une rainure s'étendant axialement et correspondant à au moins une languette, fournie de manière appariée sur ladite première surface de couplage circonférentielle interne respective (122) et ladite surface de verrouillage circonférentielle externe (132).
